(19) Europäisches Patentamt
European Patent Office
Office européen des brevets

(11) Veröffentlichungsnummer: **0 112 542**
**B1**

(12) **EUROPÄISCHE PATENTSCHRIFT**

(45) Veröffentlichungstag der Patentschrift: **31.05.89**

(21) Anmeldenummer: **83112686.7**

(22) Anmeldetag: **16.12.83**

(51) Int. Cl.⁴: **C 08 L 77/02**, C 08 L 77/06, C 08 K 5/13

(54) **Polyamide mit verminderter Wasseraufnahme.**

(30) Priorität: **28.12.82 DE 3248329**

(43) Veröffentlichungstag der Anmeldung: **04.07.84 Patentblatt 84/27**

(45) Bekanntmachung des Hinweises auf die Patenterteilung: **31.05.89 Patentblatt 89/22**

(84) Benannte Vertragsstaaten: **DE FR GB IT NL SE**

(56) Entgegenhaltungen:
**FR-A-2 022 765**
**GB-A-1 203 283**

**Die Akte enthält technische Angaben, die nach dem Eingang der Anmeldung eingereicht wurden und die nicht in dieser Patentschrift enthalten sind.**

(73) Patentinhaber: **BAYER AG, D-5090 Leverkusen 1 Bayerwerk (DE)**

(72) Erfinder: **Meyer, Rolf- Volker, Dr., Buchheimerstrasse 23, D-4150 Krefeld (DE)**
Erfinder: **Fahnler, Friedrich, Dipl.- Ing., Wimmersweg 60, D-4150 Krefeld (DE)**
Erfinder: **Dhein, Rolf, Dr., Deswatinesstrasse 30, D-4150 Krefeld (DE)**
Erfinder: **Michael, Dietrich, Dr., Deswatinesstrasse 57, D-4150 Krefeld (DE)**

**EP 0 112 542 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Gegenstand der Erfindung sind thermoplastisch verarbeitbare Polyamide, die phenolische Verbindungen enthalten.

Das bekannte hochwertige Eigenschaftsniveau der thermoplastisch verarbeitbaren Polyamide hängt wesentlich von den zwischen verschiedenen Carbonamidgruppen wirksamen Wasserstoffbrücken ab. Auch die durch die Polarität der Carbonamidgruppen bedingte Hydrophilie hat darauf einen großen Einfluß, da sie eine deutlich meßbare Wasseraufnahme sowohl bei Wasserlagerung als auch im Normklima (s. z. B. Kunststoffhandbuch Band VI, Polyamide, Carl-Hanser-Verlag, München, 1966, S. 458 ff) verursacht.

So hängt z. B. die Schlägzähigkeit von Formkörpern aus Polyamiden erheblich vom Wassergehalt der Formkörper ab. Im wasserfreien Zustand, z. B. nach der Herstellung der Formkörper durch Spritzgießen, sind besonders die aus leicht fließenden und damit leicht verarbeitbaren Polyamiden mit mittleren Molekulargewichten hergestellten Formkörper relativ empfindlich gegen Schlagbeanspruchung. Dies gilt besonders für Formkörper aus teilkristallinen Polyamiden.

Durch das Konditionieren mit Wasser kann die Zähigkeit dieser Formkörper zwar deutlich verbessert werden. Es tritt jedoch parallel dazu eine Weichmachung der Produkte ein, die besonders deutlich durch eine drastische Verminderung der Steifigkeit, gemessen durch den E-Modul, zu beobachten ist.

Für viele Einsatzgebiete, insbesondere für Funktions- und Karosserieteile im Automobilsektor, ist jedoch eine hohe Steifigkeit und ausreichende Zähigkeit der Formteile notwendig.

Da die Wasseraufnahme bei Polyamiden auch von deren Kristallinität abhängt, kann diese in geringem Maße durch kristallisationsfördernde Zusätze und durch geeignete Nachbehandlung (z. B. Tempern) beeinflußt werden. Eine entscheidende Veränderung der Wasseraufnahme kann dadurch bei teilkristallinen Polyamiden wie z. B. PA-6,6 aber nicht erreicht werden.

Es sind eine Reihe von Verfahrensweisen bekannt geworden, die Zähigkeit von Polyamiden auch im spritzfrischen Zustand, d. h. ohne den zähigkeitsfördernden Einfluß des Wassers zu verbessern. Dies gelingt z. B. durch Zumischen von bestimmten elastomeren Polymeren. So werden Polyethylene, Copolymerisate des Ethylens mit polaren Comonomeren wie Vinylacetat, (Meth)acrylsäure(ester) als zähigkeitsverbessernde Zusätze vorgeschlagen oder geeignete modifizierte Kautschuke wie z. B. Copolymere aus Butadien und Acrylnitril.

In all diesen Fällen wird eine Verbesserung der Zähigkeit der Produkte erzielt. Da aber die Neigung des in der Regel als Hauptkomponente vorliegenden Polyamids zur Wasseraufnahme trotz Modifizierung unverändert erhalten bleibt, verschlechtert sich die Steifigkeit, die durch den polymeren Zähigkeitsmodifikator bereits vermindert wurde, durch die Wasseraufnahme meist so stark, daß die Produkte für technische Teile mit hohen Ansprüchen an Steifigkeit, Zähigkeit und Dimensionsstabilität völlig ungeeignet sind.

Bei Polyamiden aus langkettigen amidbildenden Bausteinen, d. h. bei Produkten mit geringeren Konzentrationen an CONH-Gruppen in den Polymerketten, wird deutlich weniger Wasser aufgenommen und der entsprechende Einfluß auf die mechanischen Eigenschaften ist geringer, die Produkte weisen aber für viele Anwendungen eine zu geringe Wärmeformbeständigkeit und Steifigkeit auf und sind darüber hinaus wegen des hohen Preises der Ausgangsstoffe kostspielig.

Es besteht somit ein Bedarf an Polyamiden mit hoher Wärmeformbeständigkeit, hoher Steifigkeit, befriedigender Zähigkeit und gegenüber PA-6 bzw. PA-6,6 verbesserter Dimensionsstabilität.

Überraschend wurde nunmehr gefunden, daß man die Wasseraufnahme von Polyamiden, vorzugsweise von teilkristallinen Polyamiden, senken und Polyamide mit der angegebenen Eigenschaftskombination erreichen kann, wenn man die Polyamide mit speziellen höhermolekularen phenolischen Verbindungen modifiziert.

Die Verwendung einer Vielzahl von sterisch gehinderten, vorzugsweise o, o' disubstituierten, sterisch gehinderten phenolischen Verbindungen als Wärmestabilisatoren für Polyamide wurde bereits wiederholt vorgeschlagen. Diese Verbindungen sind üblicherweise bereits in Mengen von 0,5 Gew.-% ausreichend wirksam.

In der DOS-1 769 662 wird der Einsatz von bis zu 40 % Gew.-% spezieller Phenole, vorzugsweise Polyphenole, zur Verbesserung der Dehnbarkeit von Polyamidfasern empfohlen. Ein Hinweis auf eine Verbesserung der Dimensionsstabilität von Polyamiden findet sich nicht.

Gegenstand der Erfindung sind daher thermoplastische, ggf. verstärkte, Polyamidformmassen, die dadurch gekennzeichnet sind, daß sie 0,5 - 15 Gew.-%, vorzugsweise 2 - 8 Gew.-%, bezogen auf das Polyamid, wenigstens eines Monophenols mit mindestens 10 C-Atomen enthalten, wobei das Phenol höchstens in einer o-Stellung zur phenolischen OH-Gruppe substituiert sein darf und die allgemeine Formel I aufweist.

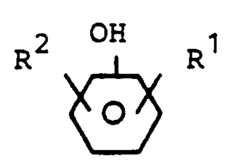

(I)

in der

$R^1$ und $R^2$ unabhängig voneinander Wasserstoff, eine $C_4$ - $C_{12}$ - Alkyl-, ein $C_6$ - $C_{12}$ - Aryl- oder ein $C_7$-$C_{15}$ - Aralkylradikal bedeuten, wobei jedes der Radikale mit wenigstens einer $C_1$ - $C_{12}$ Alkylgruppe oder einem Halogenatom (vorzugsweise Cl oder Br) substituiert sein kann und die Arylradikale über -O-, $C_1$ - $C_3$-Alkylen oder -$SO_2$-Brückengliedern verbunden sein können,

oder

$R^1$ und $R^2$ Glieder eines aromatischen oder cycloaliphatischen Ring mit $C_5C_{12}$ sein können.

Besonders bevorzugt sind höhermolekulare bzw. langkettige Phenole mit > $C_{10}$, wie ein- oder mehrfach $C_1$ - $C_{12}$-Alkyl- und/oder $C_7$ - $C_{15}$-Aralkyl substituierte Monophenole mit $C_{10}$ - $C_{22}$- die maximal in einer o-Stellung zur OH-Gruppe substituiert sein dürfen, oder gegebenenfalls mit mindestens einer $C_1$ - $C_6$-Alkyl-Gruppe substituierte Hydroxy-di-oder Triphenyle, deren Ringe gegebenenfalls über -O-, $C_1$-$C_3$-Alkylen oder -$SO_2$-Brückenglieder verbunden sein können und die höchstens in einer o-Stellung zur OH-Gruppe substituiert sein dürfen.

Beispielhaft können folgende phenolische Verbindungen genannt werden:

Tetrahydronaphthol, 2-Butyl-phenol (sek. und tert.) 4-t-Butylphenol, Thymol, 4-tert.-Pentylphenol, Octylphenol (gemische), Nonylphenol (gemische), Dodecyl-phenol (gemische), 4-Hydroxydiphenyl, 2-Hydroxydiphenyl, mit Alkylgruppen substituierte Hydroxydiphenylen wie sie z. B. in der DOS-1 943 230 beschrieben sind, 1-Naphthol, 2-Naph-thol, Benzylphenol(e), Benzyl-Kresol(e), 2-Phenyl-2-(4-hydroxyphenyl)-propan, 4-Hydroxydiphenylsulfon, 4-Hydroxydiphenylether, 2- oder 4-Cyclohexylphenole oder Gemische der genannten Verbindungen.

Besonders bevorzugt sind Nonylphenol, Dodecylphenol, 2-Hydroxybiphenyl und 2-Phenyl-2-(4-hydroxyphenyl)-propan. Die phenolische Komponente wird vorzugsweise in Mengen von 0,5 - 15, besonders bevorzugt zu 2 - 8 Gew.-%, bezogen auf das Polyamid, eingearbeitet.

Als Polyamide können lineare Polykondensate aus Lactamen mit wenigstens 5 Ringgliedern wie z. B.ε-Caprolactam oder Laurinlactam, oder aus entsprechenden ω-Aminocarbonsäuren, oder aus Diaminen und Dicarbonsäuren wie 6,6-, 6,7-, 6,8-, 6,9-, 6,10-, 6,12-, 8,8-, 12,12-Polyamid, oder Polykondensate aus aromatischen Dicarbonsäuren wie Isophthalsäure, Terephthalsäure mit Diaminen wie Hexamethylendiaminen, Octamethylendiamin, aus araliphatischen Ausgangsstoffen wie m- oder p-Xylylendiaminen und Adipinsäure, Korksäure, Sebazinsäure, Polykondensate auf Basis von alicyclischen Ausgangsstoffen wie Cyclohexandicarbonsäure, Cyclohexandiessigsäure, Diaminodicyclohexylmethanen, Isophorondiamin verwendet werden.

Vorzugsweise werden teilkristalline Polyamide, besonders bevorzugt PA-6 und PA-6,6, verwendet.

Anstelle von Polyamiden können auch Polymerlegierungen eingesetzt werden aus überwiegend, vorzugsweise zu mindestens 60 Gew.-% Polyamid und bekannten elastifizierenden Polymeren wie z. B. Polyolefinen, olefinischen Copolymerisaten, vorzugsweise solchen mit Anteilen an eingebauten polaren Gruppen bzw. auch entsprechenden Pfropf(Co) -polymerisaten.

Zur Herstellung der erfindungsgemäßen modifizierten Polyamide können die Polyamidkomponente und die Modifikatoren oberhalb des Schmelzpunktes des Polyamids miteinander vermischt werden. Dies kann z. B. unmittelbar nach der Herstellung des Polyamids durch Vermischen des Modifikators mit der als Strang abzuspinnenden Schmelze erfolgen. Vorzugsweise werden die erfindungsgemäß modifizierten Polyamide durch Mischen der Ausgangskomponenten in üblichen Schneckenmaschinen hergestellt.

Dieses Verfahren wird insbesondere gewählt, wenn neben Polyamiden weitere Polymere zur Herstellung entsprechend modifizierter Polymerlegierungen eingesetzt werden oder andere Additive wie Stabilisatoren, Entformungsmittel, Gleitmittel, Kristallisationsbeschleuniger, Weichmacher, Pigmente, Farb-, Verstärkungs- und/oder Füllstoffe, wie Glasfasern oder Asbest, eingearbeitet werden.

Zur Compoundierung eignen sich übliche bekannte Apparaturen. Doppelschneckenextruder werden bevorzugt eingesetzt.

Die erfindungsgemäßen Polyamidformmassen zeichnen sich bei sonst unverändertem guten Eigenschaftsbild gegenüber den unmodifizierten Polyamiden durch eine erheblich verbesserte Dimensionstabilität und eine höhere Steifigkeit aus. Besonders geeignet sind die Polyamidformmassen zur Herstellung von faserverstärkten, insbesondere glasfaserverstärkten oder mit Füllstoffen abgemischten Formkörpern, da der erwünschte versteifende und hartmachende Effekt der vorzugsweise in Mengen von 10 - 60 Gew.-% zugegebenen Zuschläge durch die Wasseraufnahme weit weniger als bisher kompensiert wird.

Diese glasfaserverstärkten Produkte zeichnen sich auch durch eine verbesserte Reißdehnung und Zähigkeit aus.

Die neuen Polyamidformmassen eignen sich besonders zur Herstellung von Formkörpern nach dem Spritzgußverfahren und vorzugsweise für Anwendungen, bei denen es auf die Kombination von hoher Steifigkeit, hoher Wärmeformbeständigkeit und zufriedenstellender Zähigkeit ankommt. Die glasfaserverstärkten Produkte eignen sich vorzugsweise für Formteile im Automobilbau wie Kühlerkästen oder Ölwannen.

**Beispiel 1**

95 Gew.-% eines 6-Polyamids mit einer rel. Viskosität von 2,9, gemessen in 1 %-iger Lösung in m-Kresol bei 25°C und 5 Gew.-% p-Nonylphenol (Isomerengemisch) werden getrennt mittels einer Dosierwaage bzw. einer Dosierpumpe in einen Zweiwellenextruder vom Typ ZSK 53 gefördert und bei 260°C mit 90 UpM extrudiert. Die homogene Schmelze wird als Strang in ein Wasserbad abgesponnen, granuliert und bei 80 - 100°C bis zu einem Wassergehalt von < 0,1 % getrocknet. Das Produkt hat eine rel. Viskosität von 2,8.

Aus dem Produkt hergestellte Formkörper werden zusammen mit unmodifizierten Vergleichsproben (VV 1) über längere Zeiträume im Normklima und in Wasser gelagert. Die erfindungsgemäß modifizierten Polyamide nehmen unter allen Bedingungen deutlich weniger Wasser auf. Meßdaten sind in Tabelle 1 zusammengestellt.

**Beispiel 2 - 5**

Analog Beispiel 1 werden verschiedene hydrophobierende Additive in verschiedene Polyamide eingearbeitet und die erhaltenen Produkte wie in Beispiel 1 beschrieben untersucht. Die Zusammensetzung der modifizierten Polyamide und ihre Eigenschaften sind in Tabelle 1 aufgeführt.

**Beispiel 6 - 8**

Analog Beispiel 1 werden glasfaserverstärkte Polyamide hergestellt und die erhaltenen Produkte zu Formkörpern verarbeitet. Die Zusammensetzung der modifizierten glasfaserverstärkten Polyamide und ihre Eigenschaften sind in Tabelle 2 zusammengefaßt.

**Beispiel 9**

Aus 60 Gew.-Teilen eines 6-Polyamids mit einer rel. Viskosität von 2,9 wird wie in Beispiel 1 beschrieben mit 24 % Glasfasern, 11 % eines mit Methylmethacrylat gepfropften Polybutadien-Kautschuks (GB4) und mit 5 % o-Phenylphenol ein glasfaserverstärktes, elastomermodifiziertes 6-PA hergestellt, das im spritzfrischen Zustand eine Reißdehnung von 10,9 % aufweist.

**Vergleichsversuch 5**

Ein analog Beispiel 9 aus 65 Gew.-Teilen PA-6, 24 % Glasfasern und 11 % der gleichen mit Methylmethacrylat gepfropften Polybutadien-Kautschuks hergestelltes Produkt ohne hydrophobierenden Zusatz hat eine Reißfestigkeit von nur 5,4 %.

Tabelle 1

| | Ausgangskomponenten | | | Produktionsgenschaften | | |
|---|---|---|---|---|---|---|
| | PA-Typ (η rel) | Menge (Gew.-%) | Additiv (Gew.-%) | η rel | Wasseraufnahme (Gew.-%) im Normklima nach 66 Tg. | bei Wasserlagerung (23°C) nach 40 Tg. |
| Beispiel 1 | PA-6 (2,9) | 95 | 5 p-Nonylphenol | 2,8 | 0,78 | 3,40 |
| Beispiel 2 | " | 95 | 5 o-Phenylphenol | 2,8 | 0,74 | 3,14 |
| Beispiel 3 | " | 99 | 1 o-Phenylphenol | 2,9 | 0,94 | 4,41 |
| Beispiel 4 | " | 95 | 5 p-Cumylphenol | 2,8 | 0,80 | 3,76 |
| Beispiel 5 | PA-6,6 (2,7) | 95 | 5 o-Phenylphenol | 2,6 | 0,53 | 1,85 |
| VV 1 | PA-6 | 100 | - | 2,9 | 1,06 | 5,10 |
| VV 2 | PA-6,6 | 100 | - | 2,7 | 0,70 | 2,80 |

Tabelle 2

| | Ausgangskomponenten | | | | Normklima Produkteigenschaften Wasseraufnahme (Gew.-%) | |
|---|---|---|---|---|---|---|
| | PA-Typ (rel) | Menge (Gew.-%) | Glasfaser (Gew.-%) | Additiv (Gew-%) | im Normklima nach 66 Tg. | bei Wasserlagerung 24 h/60°C |
| Beispiel 6 | PA-6 (2,9) | 65 | 30 | 5 o-Phenylphenol | 0,36 | 2,0 |
| VV | " | 70 | 30 | - | 0,56 | 3,2 |
| Beispiel 7 | PA-6,6 (2,8) | 65 | 30 | 5 o-Phenylphenol | 0,35 | 1,1 |
| VV 4 | " | 70 | 30 | - | 0,48 | 1,6 |
| Beispiel 8 | PA-6,6 (2,8) | 65 | 30 | 5-p Cumylphenol | 0,28 | 1,2 |

**Patentansprüche**

1. Thermoplastische, gegebenenfalls verstärkte Polyamidformmassen, dadurch gekennzeichnet, daß sie 0,5 bis 15 Gew.-%, bezogen auf Polyamid, wenigstens eines Monophenols mit mindestens 10 C-Atomen enthalten, wobei das Phneol in höchstens einer o-stellung zur phenolischen OH-Gruppe substituiert sein darf und die allgemeine Formel I aufweist:

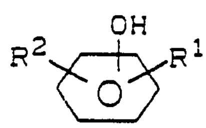

(I),

in der

$R^1$ und $R^2$ Wasserstoff, ein $C_4$-$C_{12}$ Alkyl-, ein $C_6$ - $C_{12}$-Aryl-, ein $C_7$ - $C_{15}$-Aralkylradikal bedeuten, wobei jedes der Radikale mit wenigstens einer $C_1$ - $C_{12}$ Alkylgruppe oder Cl oder Br substituiert sein kann und die Arylradikale über -O-, $C_1$ - $C_3$-Alkylen oder -$SO_2$-Brückengliedern verbunden sein können, oder
$R^1$ und $R^2$ Glieder eines aromatischen oder cycloaliphatischen Ringes mit $C_5$ - C12 sein können.

2. Polyamidformmassen nach Anspruch 1, dadurch gekennzeichnet, daß sie 10 bis 60 Gew.-% Verstärkungsmaterialien enthalten und/oder Polymerlegierungen aus mindestens 60 Gew.-% Polyamid und bekannten elastifizierenden Polymeren sind.

3. Polyamidformmassen nach wenigstens einem der vorangehenden Ansprüche, dadurch gekennzeichnet, daß sie 2 bis 8 Gew.-% der phenolischen Komponente enthalten.

4. Polyamidformmassen nach wenigstens einem der vorangehenden Ansprüche, dadurch gekennzeichnet, daß als phenolische Komponente Tetrahydronaphthol, 2-Butylphenol (sek. und tert.), 4-t-Butylphenol, 4-tert.-Pentylphenol, Octylphenol(gemische), Nonylphenol(gemische), Dodecylphenol(gemische), 4-Hydroxydiphenyl, 2-Hydroxydiphenyl, mit Alkylgruppen substituierte Hydroxydiphenyle, 1-Naphthol, 2-Naphthol, Benzylphenol(e), Benzyl-Kresol(e), 2-Pheny-2-(4-hydroxyphenyl)-propan, 4-Hydroxydiphenylsulfon, 4-Hydroxydiphenylether, 2- oder 4-Cyclohexylphenole oder Gemische der genannten Verbindungen verwendet werden.

5. Polyamidformmassen nach wenigstens einem der vorangehenden Ansprüche, dadurch gekennzeichnet, daß als phenolische Komponenten Nonylphenol, Dodecylphenol, 2-Hydroxybiphenyl oder 2-Phenyl-2-(4-hydroxyphenyl)propan verwendet werden.

6. Polyamidformmassen nach wenigstens einem der vorangehenden Ansprüche, dadurch gekennzeichnet, daß als Polyamid Polyamid-6 oder Polyamid-6,6 verwendet wird.

**Claims**

1. Thermoplastic, optionally reinforced polyamide moulding compounds, characterized in that they contain from 0.5 to 15 % by weight, based on polyamide, of at least one monophenol containing at least 10 C-atoms which may be substituted in at most one o-position to the phenolic OH group and has the following general formula

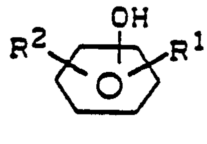

(I),

in which

$R^1$ and $R^2$ represent hydrogen, a $C_4$ - $C_{12}$ alkyl, a $c_6$ - $C_{12}$ aryl, a $C_7$ - $C_{15}$ aralkyl radical; each of these radicals may be substituted by at least one $C_1$ - $C_{12}$ alkyl group or Cl or Br and the aryl radicals may be attached via -O-, $C_1$ - $C_3$ alkylene or $-SO_2$-bridge members, or

$R^1$ and $R^2$ may be members of an aromatic or cycloaliphatic ring containing 5 to 12 C atoms.

2. Polyamide moulding compounds as claimed in claim 1, characterized in that they contain 10 to 60 % by weight of reinforcing materials and/or polymer alloy of at least 60 % by weight polyamide and known elasticizing polymers.

3. Polyamide moulding compounds as claimed in at least one of the preceding claims, characterized in that they contain 2 to 8 % by weight of the phenolic component.

4. Polyamide moulding compounds as claimed in at least one of the preceding claims, characterized in that they contain as phenolic component tetrahydronaphthol, 2-butyl phenol (sec. and tert.), 4-t-butyl phenol, 4-tert.-pentyl phenol, octyl phenol (mixtures), nonyl phenol (mixtures), dodecyl phenol (mixtures), 4-hydroxydiphenyl, 2-hydroxydiphenyl, alkyl-substituted hydroxydiphenyls, 1-naphthol, 2-naphthol, benzyl phenol(s), benzyl cresol(s), 2-phenyl-2-(4-hydroxy-phenyl)-propane, 4-hydroxy diphenyl sulfone, 4-hydroxy diphenyl ether, 2- or 4-cyclohexyl phenols or mixtures of the above-mentioned compounds.

5. Polyamide moulding compounds as claimed in at least one of the preceding claims, characterized in that nonyl phenol, dodecyl phenol, 2-hydroxybiphenyl or 2-phenyl-2-(4-hydroxyphenyl)-propane are used as the phenolic components.

6. Polyamide moulding compounds as claimed in any of the preceding claims, characterized in that polyamide-6 or polyamide-6,6 is used as the polyamide.

**Revendications**

1. Mélanges à mouler thermoplastiques à base de polyamides, éventuellement renforcés, caractérisés en ce qu'ils contiennent 0,5 à 15 % en poids, par rapport au polyamide, d'au moins un monophénol ayant au moins 10 atomes de carbone, le phénol pouvant être substitué tout au plus dans l'une des positions ortho par rapport au groupe OH phénolique et répondant à la formule générale I:

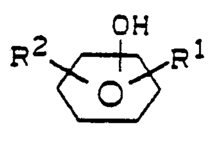

(I)

dans laquelle

$R^1$ et $R^2$ représentent l'hydrogène, un radical alkyle en $C_4$ à $C_{12}$, un radical aryle en $C_6$ à $C_{12}$, un radical aralkyle en $C_7$ à $C_{15}$, chacun des radicaux pouvant être substitué avec au moins un groupe alkyle en $C_1$ à $C_{12}$ ou un atome Cl ou Br et les radicaux aryle pouvant être liés par l'intermédiaire de ponts -O-, alkylène en $C_1$ à $C_3$ ou $-SO_2-$,

ou bien

$R^1$ et $R^2$ peuvent être des membres d'un noyau aromatique ou cycloaliphatique de 5 à 12 atomes de carbone.

2. Mélanges à mouler à base de polyamides suivant la revendication 1, caractérisés en ce qu'ils contiennent 10 à 60 en poids de matières de renforcement et/ou d'alliages de polymères constitués d'au moins 60 % en poids de polyamide et de polymères connus conférant le caractère élastique.

3. Mélanges à mouler à base de polyamides suivant au moins l'une des revendications précédentes, caractérisés en ce qu'ils contiennent 2 à 8 % en poids du composant phénolique.

4. Mélanges à mouler à base de polyamides suivant au moins l'une des revendications précédentes, caractérisés en ce qu'on utilise comme composant phénolique le tétrahydronaphtol, le 2-butylphénol (secondaire et tertiaire), le 4-tertio-butylphénol, le 4-tertio-pentyl-phénol, l'octylphénol (mélanges), le nonylphénol (mélanges), le dodécylphénol (mélanges), le 4-hydroxydiphényle, le 2-hydroxydiphényle, des hydroxydiphényles substitués avec des groupes alkyle, le 1-naphtol, le 2-naphtol, un ou des benzylphénols, un ou des benzylcrésols, le 2-phényl-2-(4-hydroxyphényl)-propane, la 4-hydroxydiphénylsulfone, l'éther de 4-hydroxydiphényle, des 2- ou 4-cyclohexyl-phénols ou des mélanges des composés mentionnés.

5. Mélanges à mouler à base de polyamides suivant au moins l'une des revendications précédentes,

caractérisés en ce qu'on utilise comme composants phénoliques le nonylphénol, le dodécylphénol, le 2-hydroxybiphényle ou le 2-phényl-2-(4-hydroxyphényl)-propane.

6. Mélanges à mouler à base de polyamides suivant au moins l'une des revendications précédentes, caractérisés en ce qu'on utilise comme polyamide le polyamide 6 ou le polyamide 6,6.